# NEUE EUROPÄISCHE PATENTSCHRIFT

(11) **EP 0 509 071 B2**
(45) Veröffentlichungstag und Bekanntmachung des Hinweises auf die Entscheidung über den Einspruch: **01.12.1999**
(45) Hinweis auf die Patenterteilung: 28.12.1994
(21) Anmeldenummer: 91918324.4
(22) Anmeldetag: 22.10.1991
(51) Int. Cl.: F16L 5/00, E03C 1/042

(54) **ABDECKROSETTE FÜR SANITÄRE WASSERARMATUREN**
COVER SURROUND FOR BATHROOM FITTINGS, IN PARTICULAR FOR WALL-MOUNTED FITTINGS
ROSACE DE RECOUVREMENT POUR ROBINETTERIES A EAU SANITAIRES, EN PARTICULIER POUR ROBINETTERIES ENCASTREES

(30) Priorität: 02.11.1990 DE 4034898
(43) Veröffentlichungstag der Anmeldung: 21.10.1992
(73) Patentinhaber: IDEAL-STANDARD GMBH, D-53008 Bonn (DE)
(72) Erfinder: THUL, Alfons, W-5569 Mehren (DE)
(74) Vertreter: Gesthuysen, Hans Dieter, Dipl.-Ing.
(86) Internationale Anmeldenummer: EP9102001
(87) Internationale Veröffentlichungsnummer: WO9208071

(56) Entgegenhaltungen:
- EP-A- 0 300 360
- DE-A- 2 930 518
- DE-A- 3 132 857
- DE-A- 4 035 911
- DE-A- 4 103 955
- DE-C- 3 132 855
- DE-U- 9 104 764
- US-A- 35 515
- US-E- 27 655
- GEBERIT INFORMATIONEN März 1987

## Beschreibung

Die Erfindung betrifft eine Abdeckrosette nach dem Oberbegriff des Anspruchs 1.

Eine derartige Abdeckrosette für sanitäre Wasserarmaturen ist bereits aus der DE - A - 29 30 518 bekannt. Bei dieser Abdeckrosette wird die äußere Abdeckplatte auf die Wandmischbatterie aufgeschraubt. Dies kann per Hand oder aber mit Hilfe von Werkzeugen erfolgen. Während jedoch bei dem Aufschrauben mit Hilfe eines Werkzeugs insbesondere beim Anziehen die Gefahr einer Beschädigung der Abdeckplatte besteht kann es beim manuellen Aufschrauben ohne ausreichendes Anziehen zu einem relativ leichten Lösen der Abdeckplatte kommen.

Weiterhin ist aus der US - E - 27,655 eine Abdeckrosette für sanitäre Wasserarmaturen bekannt, bei der die zur Befestigung der inneren Halteplatte an der Installationswand dienenden Schrauben von der Abdeckplatte verdeckt werden, die Abdeckplatte ihrerseits jedoch wiederum über wenigstens eine Schraube an der inneren Halteplatte gehalten wird. Abgesehen von optisch-ästhetischen Nachteilen besteht bei dieser Art der Befestigung der äußeren Abdeckplatte die Gefahr, daß beim Eindrehen der Schraube zur Befestigung der Abdeckplatte der Schraubenkopf und/oder die Abdeckplatte selbst verkratzt werden, wenn beispielsweise der Installateur mit seinem Schraubendreher abrutscht. Nicht selten kommt es sogar zu Deformationen derAbdeckplatte, wenn die Schraube zu fest angezogen wird. Hinzu kommt noch, daß die Pflege der äußeren Abdeckplatte im Bereich des Schraubenkopfes erschwert ist Dies ist deshalb besonders nachteilig, da sich insbesondere im Bereich des Schraubenkopfes Schmutz ansammelt.

Der Erfindung liegt nun die Aufgabe zugrunde, eine von den zuvor beschriebenen Nachteilen freie Abdeckrosette anzugeben und außerdem eine einwand freie Abdichtung zu gewährleisten.

Diese Aufgabe wird durch die Merkmale des Anspruchs 1 gelöst.

Durch die erfindungsgemäße Ausbildung der Abdeckrosette werden sämtliche der zuvor genannten und beim Stand der Technik insgesamt auftretenden Nachteile vermieden. Insbesondere kann, da bei der Erfindung eine Verschraubung zur Befestigung der äußeren Abdeckplatte nicht erforderlich ist, kein Verkratzen oder gar eine Deformation der Abdeckplatte oder sonstiger Bauteile der Abdeckrosette mehr bei der Montage auftreten. Ein unbeabsichtigtes Lösen der äußeren Abdeckplatte ist bei der Erfindung ebenfalls ausgeschlossen. Da die äußere Oberfläche der Abdeckplatte darüber hinaus völlig frei von Befestigungsmitteln ist, läßt sie sich ohne weiteres reinigen. Spalte oder ähnliche schlecht zugängliche Stellen, in denen sich Schmutz ansammeln könnte, sind bei der erfindungsgemäßen Abdeckrosette nicht vorhanden. Außerdem ist die Montage insgesamt erheblich vereinfacht, da sich das Befestigen derAbdeckplatte mit der Halteplatte wegen des Verrastens in kürzester Zeit verwirklichen läßt. Schließlich ergibt sich durch die erfindungsgemäße Ausbildung ein ästhetisch sehr ansprechender Gesamteindruck, der durch etwaige von außen sichtbare Befestigungsmittel nicht gestört ist.

Im einzelnen gibt es nun verschiedene Möglichkeiten, die erfindungsgemäße Abdeckrosette für sanitäre Wasserarmaturen, insbesondere für Unterputzarmaturen auszugestalten und weiterzubilden. Dazu wird einerseits auf die dem Patentanspruch 1 nachgeordneten Patentansprüche, andererseits auf die folgende Beschreibung eines Ausführungsbeispiels verwiesen; in der Zeichnung zeigen
- Fig. 1: in einer Explosionsdarstellung eine sanitäre Unterputzarmatur mit einer erfindungsgemäßen Abdeckrosette,
- Fig. 2: die Halteplatte der erfindungsgemäßen Abdeckrosette, von hinten gesehen,

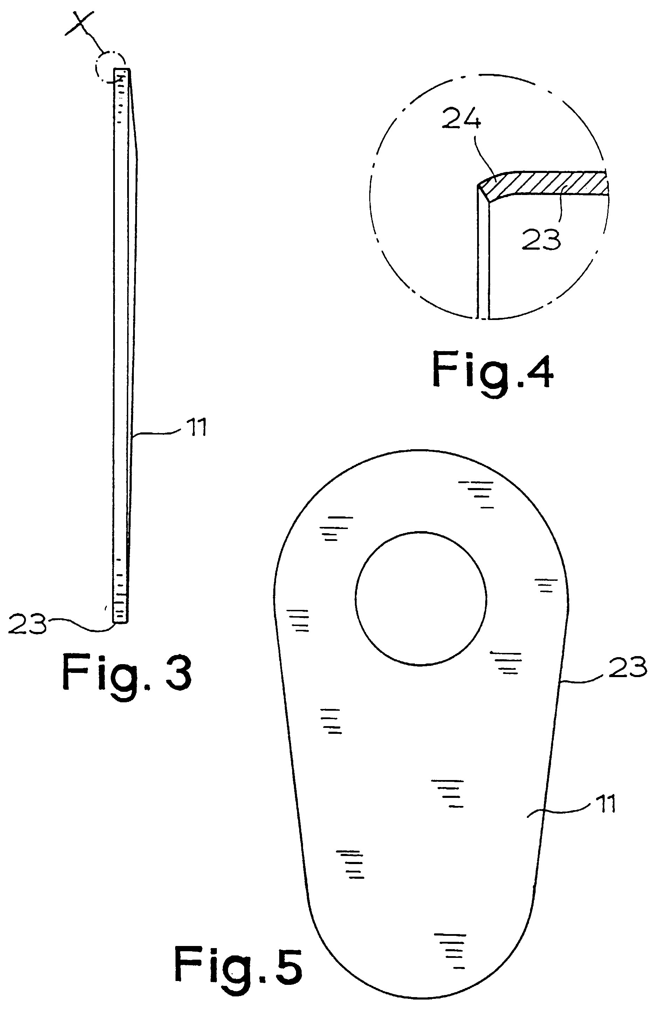

- Fig. 3: einen Längsschnitt durch die Abdeckplatte der erfindungsgemäßen Abdeckrosette,
- Fig. 4: die Einzelheit X der in Fig. 3 dargestellten Abdeckplatte der erfindungsgemäßen Abdeckrosette, vergrößert dargestellt, und
- Fig. 5: die Abdeckplatte der erfindungsgemäßen Abdeckrosette, von hinten gesehen.

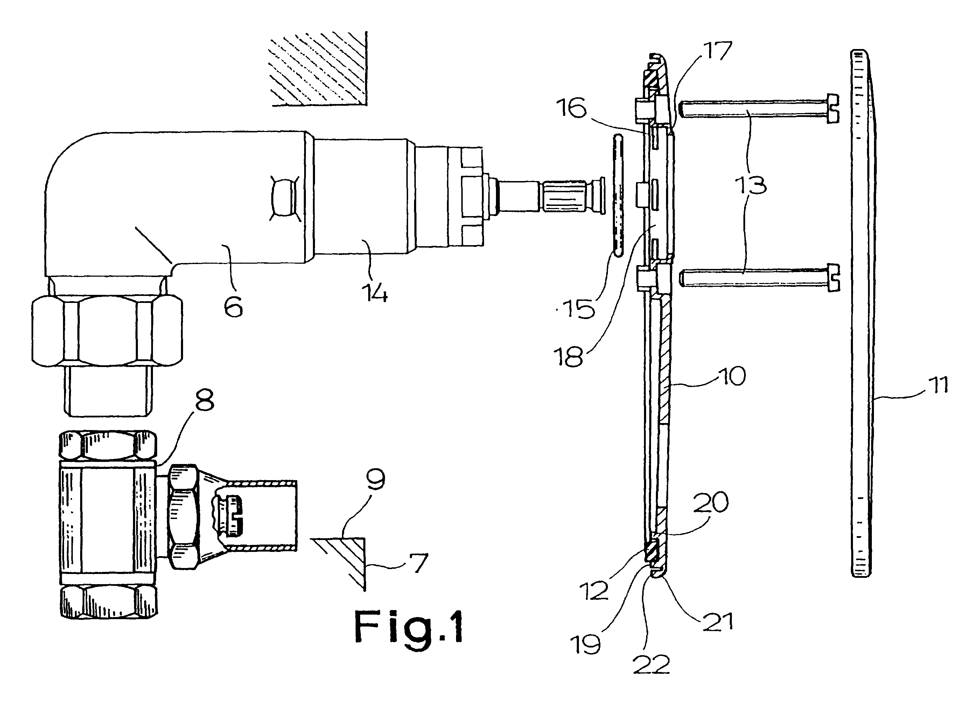

In der Fig. 1 ist schematisch eine Unterputzarmatur 6 dargestellt, angeordnet in einer Installationswand 7 und über ein Rückschlag- und Absperrventils 8 mit einer nicht dargestellten Wasserleitung verbunden.

Zur Abdeckung der in der Installationswand 7 vorgesehenen Einbauöffnung 9 und damit der Unterputzarmatur 6 und des Rückschlag- und Absperrventil 8 dient nun die erfindungsgemäße Abdeckrosette, die aus einer sich an der Installationswand 7 abstützenden inneren Halteplatte 10 und einer äußeren Abdeckplatte 11 besteht. Dabei ist die innere Halteplatte 10 mittels einer Ringdichtung 12 gegenüber der Installationswand 7 abgedichtet sowie für den Angriff von Befestigungsmitteln 13 ausgebildet. Die äußere Abdeckplatte 11 ist mit der inneren Halteplatte 10 verrastbar und deckt die an der inneren Halteplatte 10 angreifenden Befestigungsmittel 13 ab. Im dargestellten Ausführungsbeispiel sind als Befestigungsmittel 13 Schrauben vorgesehen, korrespondierende Gewindebohrungen sind nicht dargestellt. Beim Verschrauben wird die Halteplatte 10 der ererfindungsgemäßen Abdeckrosette über eine Abdeckhülse 14 der Unterputzarmatur 6 geschoben. Die Abdichtung zwischen der Abdeckhülse 14 der Unterputzarmatur 6 und der Halteplatte 10 der erfindungsgemäßen Abdeckrosette erfolgt mittels einer Ringdichtung 15, die zwischen einer Verrippung 16 und einem Innenkragen 17 in einer Öffnung 18 der Halteplatte 10 angeordnet ist.

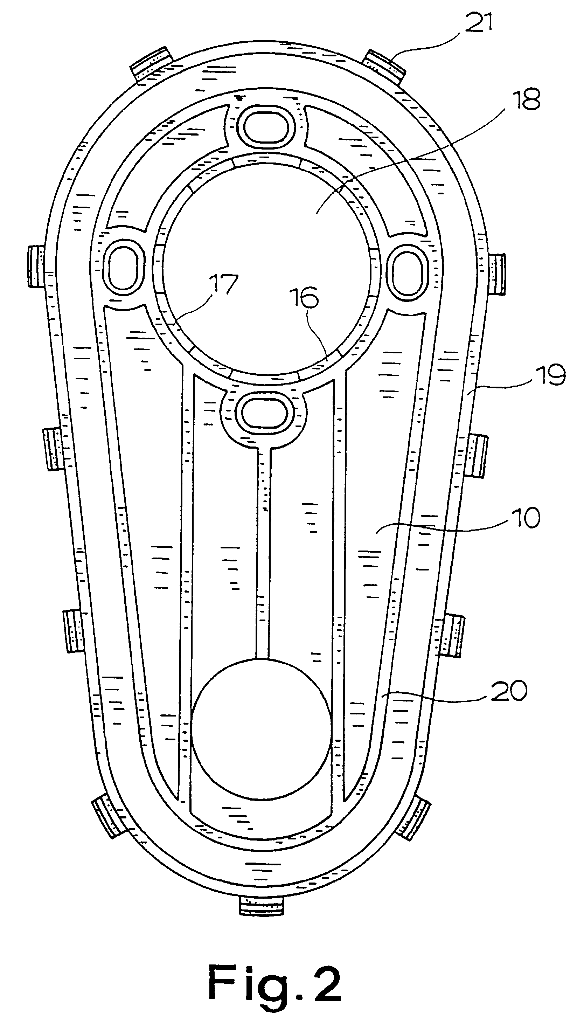

Wie in den Fig. 1 und 2 zu erkennen, stützt sich die Halteplatte 10 der erfindungsgemäßen Abdeckrosette über einen äußeren Abstützrand 19 und einen inneren Abstützrand 20 sowie über die Ringdichtung 12 an der Installationswand 7 ab; die Ringdichtung 12 ist dabei zwischen den Abstützrändern 19, 20 gehalten.

Weiter oben ist bereits ausgeführt worden, daß bei der erfindungsgemäßen Abdeckrosette die äußere Abdeckplatte 11 mit der inneren Halteplatte 10 verrastbar ist. Dazu befinden sich im dargestellten Ausführungsbeispiel am äußeren Abstützrand 19 der Halteplatte 10 nasenförmige Vorsprünge 21 mit federnden Eigenschaften. Die nasenförmigen Vorsprünge 21 sind gegenüber dem Abstützrand 19 zurückgesetzt; die freien Enden 22 der nasenförmigen Vorsprünge 21 kommen also mit der Installationswand 7 nicht in Berührung. Zur Verrasterung der Abdeckplatte 11 mit der Halteplatte 10 wirken die nasenförmigen Vorsprünge 21 der Halteplatte 10 mit einem Klemmrand 23 der Abdeckplatte 11 zusammen; die nasenförmigen Vorsprünge 21 liegen federnd an dem Klemmrand 23 der Abdeckplatte 1 an. Im verrasteten Zustand befindet sich die Abdeckplatte 11 mit Abstand zur Installationswand 7. Der der Installationswand 7 zugewandte Endbereich 24 des Klemmrandes 23 der Abdeckplatte 11 ist nach innen gebogen, um die Verrastung zu sichern. Da der Klemmrand 23 im verrasteten Zustand der Abdeckplatte 11 Abstand zur Installationswand 7 hat, kann eine Entrastung der Abdeckplatte 11 leicht mit einem Werkzeug vorgenommen werden, so daß die verdeckten Befestigungsmittel 13 für ggf. erforderliche Wartungs- und/oder Reparaturarbeiten jederzeit zugänglich sind.

Die erfindungsgemäße, zuvor in Verbindung mit einer Unterputzarmatur 6 beschriebene Abdeckrosette ist nicht auf die Verwendung in Verbindung mit Unterputzarmaturen beschränkt. Vielmehr kann die erfindungsgemäße Abdeckrosette auch bei Wasserarmaturen verwendet werden, die auf Waschtischen, Bidets, Badewannen usw. montiert sind. So ist es z. B. in den USA üblich, die Armaturenbank von Waschtischen mit drei Löchern zu versehen, um ggf. eine Dreilocharmatur anbringen zu können. Wird hingegen nur eine Einlocharmatur, beispielsweise in Form eines Einhebelmischers oder eines Zweigriffmischers gewünscht, so müssen die beiden anderen Löcher geschlossen werden. Das kann dann erfindungsgemäß mit einer durchgehenden inneren Halteplatte oder mit zwei separaten inneren Halteplatten erfolgen, die mit der Armaturenbank verbunden wird bzw. verbunden werden. Mit der Halteplatte bzw. mit den Halteplatten kann dann wiederum eine Abdeckplatte bzw. können Abdeckplatten verrastet werden.

## Patentansprüche

1. Abdeckrosette für sanitäre Wasserarmaturen, insbesondere für Unterputzarmaturen (6), mit einer sich an der Installationswand (7) abstützenden inneren Halteplatte (10), einer äußeren Abdeckplatte (11) und einer Ringdichtung (12), wobei die innere Halteplatte (10) mittels der Ringdichtung (12) gegenüber der Installationswand (7) abgedichtet sowie für den Angriff von Befestigungsmitteln (13) zur Befestigung an der Installationswand (7) ausgebildet ist wobei in der Halteplatte (10) eine Öffnung (18) und in der Abdeckplatte (11) eine weitere Öffnung zum Hindurchstecken eines Teils der sanitären Wasserarmatur, insbesondere einer Abdeckhülse (14), vorgesehen ist und wobei die äußere Abdeckplatte (11) sämtliche an der inneren Halteplatte (10) angreifende Befestigungsmittel (13) abdeckt, so daß auf der äußeren Abdeckplatte (11) keine Befestigungsmittel (13) für die innere Halteplatte (10) sichtbar bleiben, **dadurch gekennzeichnet,** daß die äußere Abdeckplatte (11) lediglich an der inneren Halteplatte (10) durch Verrastung befestigt ist, daß zwischen dem Teil der sanitären Wasserarmatur, insbesondere der Abdeckhülse (14), und der Öffnung (18) in der Halteplatte (10) eine weitere Ringdichtung (15) vorgesehen ist, daß die weitere Ringdichtung (15) in der Öffnung (18) nur von der Halteplatte (10) gehalten wird, daß die innere Halteplatte (10) einen äußeren Abstützrand (19) und einen inneren Abstützrand (20) aufweist, daß die Ringdichtung (12) zwischen den Abstützrändem (19, 20) gehalten ist und daß vom äußeren Abstützrand (19) schenkelartig abstehende, nicht vom äußeren Abstützrand (19) gebildete Vorsprünge (21) mit federnden Eigenschaften zur Verrastung der Abdeckplatte (11) mit der Halteplatte (10) vorgesehen sind.

2. Abdeckrosette nach Anspruch 1, dadurch gekennzeichnet, daß der Klemmrand (23) der Abdeckplatte (11) gegenüber dem Abstützrand (19) der Halteplatte (10) zurückgesetzt ist.

3. Abdeckrosette nach Anspruch 1 oder 2, dadurch gekennzeichnet, daß der Klemmrand (23) der Abdeckplatte (11) in seinen Endbereich (24) nach innen gebogen ist.

## Claims

1. A covering rosette for sanitary water fittings, in particular for flush-mounted fittings (6) with an inner mounting plate (10) supported on the installation wall (7), an outer cover plate (11) and a ring gasket (12), where the inner mounting plate (10) is designed to be sealed with respect to the installation wall (7) by means of the ring gasket (12) and to be engaged by fastening means (13) for fastening to the installation wall (7), with an opening (18) being provided in the mounting plate (10) and another opening in the cover plate (11) for passing through a part of the sanitary water fitting, in particular a covering sleeve (14), and the outer cover plate (11) covers all the fastening means (13) acting on the inner mounting plate (10), so that no fastening means (13) for the inner mounting plate (10) remain visible on the outer cover plate (11), characterized in that the outer cover plate (11) is fastened only by lock engagement on the inner mounting plate (10); another ring gasket (15) is provided between said part of the sanitary water fitting, in particular the cover sleeve (14), and the opening (18) in the mounting plate (10); the additional ring gasket (15) is mounted in the opening (18) only by the mounting plate (10); the inner mounting plate (10) has an outer supporting edge (19) and an inner supporting edge (20); the ring gasket (12) is mounted between the supporting edges (19, 20), and projections which extend like legs away from the outer supporting edge (19) but are not formed by the outer supporting edge (19) are provided with resilient properties for lock engagement of the cover plate (11) with the mounting plate (10).

2. A covering rosette according to Claim 1, characterized in that the clamping edge (23) of the cover plate (11) is set back with respect to the supporting edge (19) of the mounting plate (10).

3. A covering rosette according to Claim 1 or 2, characterized in that the clamping edge (23) of the cover plate (11) is bent inward in its end area.

## Revendications

1. Rosace de recouvrement pour des robinets d'eau sanitaires, notamment pour des robinets (6) de type encastrés, comportant une plaque (10) de support intérieure montée en appui sur le mur (7) d'installation, une plaque (11) extérieure de recouvrement et un joint (12) d'étanchéité annulaire, la plaque (10) de support intérieure étant montée de manière étanche sur le mur (7) d'installation, au moyen du joint (12) d'étanchéité annulaire et étant prévu pour recevoir des moyens (13) de fixation pour la fixation au mur (7) d'installation, une ouverture (18) dans la plaque (10) de support et une ouverture supplémentaire dans la plaque (11) de recouvrement étant prévues pour l'insertion par enfichage d'une partie du robinet d'eau sanitaire, notamment une douille (14) de recouvrement, et la plaque (11) de recouvrement extérieur recouvrant totalement les moyens (13) de fixation en prise sur la plaque (10) de recouvrement intérieure, de sorte que ne reste visible aucun moyen (13) de fixation pour la plaque (10) de support sur la plaque (11) extérieure de recouvrement, caractérisée en ce que la plaque (11) de recouvrement extérieure est fixée uniquement à la plaque (10) de support intérieure par encliquetage, en ce que entre la partie du robinet d'eau sanitaire, notamment la douille (14) de recouvrement, et l'ouverture (18) dans la plaque (10) de support intérieure, il est prévu un joint (15) d'étanchéité torique supplémentaire, en ce que le joint (15) d'étanchéité torique supplémentaire est maintenu dans l'ouverture (18) uniquement par la plaque (10) de support, en ce que la plaque (10) de support intérieure comporte un bord (19) d'appui extérieur et un bord (20) d'appui intérieur, en ce que le joint (12) d'étanchéité torique est maintenu entre les bords d'appui (19, 20) et en ce que des saillies (21), non formées par le bord (19) d'appui extérieur, s'éloignant à la manière d'une branche du bord (19) d'appui extérieur et ayant des propriétés élastiques pour encliqueter la plaque (11) de recouvrement avec la plaque (10) de support, sont prévues.

2. Rosace de recouvrement selon la revendication 1, caractérisée en ce que le bord de serrage (23) de la plaque de recouvrement (11) est en retrait par rapport au bord d'appui (19) de la plaque de fixation (10).

3. Rosace de recouvrement selon la revendication 1 ou 2, caractérisée en ce que le bord de serrage (23) de la plaque (11) de recouvrement est incurvé vers l'intérieur dans sa région (24) d'extrémité.
